# EUROPÄISCHE PATENTSCHRIFT

(11) **EP 2 015 031 B1**
(45) Veröffentlichungstag und Bekanntmachung des Hinweises auf die Patenterteilung: **19.06.2013**
(21) Anmeldenummer: 08007082.4
(22) Anmeldetag: 10.04.2008
(51) Int. Cl.: G01D 5/26, G01B 11/04

(54) **Längenmesseinrichtung**
Length measuring device
Dispositif de mesure de longueur

(30) Priorität: 10.07.2007 DE 102007031976
(43) Veröffentlichungstag der Anmeldung: 14.01.2009
(73) Patentinhaber: Dr. Johannes Heidenhain GmbH, 83301 Traunreut (DE)
(72) Erfinder: Affa, Alfred, 83371 Stein/Traun (DE); Haunreiter, Johannes, 84489 Burghausen (DE)

(56) Entgegenhaltungen:
- DE-A1- 4 340 204
- US-A- 4 250 381

## Beschreibung

Die Erfindung betrifft eine Längenmesseinrichtung nach dem Oberbegriff des Anspruchs 1.

Derartige Längenmesseinrichtungen, wie sie beispielsweise in der DE 29 29 989 A1 beschrieben sind, dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Dabei wird als Maßverkörperung ein Maßstab verwendet, der vor Umwelteinflüssen geschützt in einem Gehäuse untergebracht ist. Temperaturänderungen innerhalb des Gehäuses verursachen eine Längenänderung des Maßstabs in Abhängigkeit des Maßstabmaterials. Diese Längenänderungen führen zu Messfehlern.

Um derartige Temperaturänderungen möglichst gering zu halten, wird gemäß der DE 101 64 404 A1 vorgeschlagen, den Innenraum der gekapselten Längenmesseinrichtung zu temperieren, indem er durch ein geregeltes Kühlmedium durchflossen wird.

Dadurch soll erreicht werden, dass der Maßstab das Temperatumiveau der Werkzeugmaschine annimmt. Nachteilig dabei ist, dass Temperaturänderungen, die durch elektrische Bauelemente der Längenmesseinrichtung selbst generiert werden, dabei nicht berücksichtigt werden.

Die DE 43 40 204 A1 zeigt eine Längenmesseinrichtung, bei der auf dem Gehäuse eine Wärmeabstrahlanordnung zum Abstrahlen der Wärme eines an diesem Gehäuse montierten Halbleiterlasers vorgesehen ist.

Bei der DE 31 24 723 A1 wurde bereits erkannt, dass Bauelemente der beweglichen Abtasteinheit Wärme generieren, die abzuleiten ist. Zur Ableitung dient in diesem Fall der Maßstab bzw. der Maßstabhalter. Dabei wird der Maßstab bzw. der Maßstabhalter aber in unzulässiger Weise durch die Wärme beeinflusst.

Die Anforderungen an Längenmesseinrichtungen werden immer höher, es wird laufend eine höhere Auflösung sowie eine höhere Genauigkeit und Reproduzierbarkeit der Positionsmessung gefordert. Dabei soll ein kompakter mechanischer Aufbau sowie eine einfache und störungssichere Messwertgenerierung und Messwertübertragung vorhanden sein.

Diese Anforderungen erfordern eine gekapselte Längenmesseinrichtung mit geschützt untergebrachtem Maßstab. Eine hohe Auflösung bedingt einen immer geringeren und über die gesamte Messlänge konstanten Abtastabstand. Dies wird einerseits durch einen relativ kleinen Abtastabstand von kleiner 100 µm erreicht und andererseits durch Führung der Abtasteinheit am Maßstab und / oder am Gehäuse, wobei zur ungestörten präzisen Führung der Abtasteinheit der Mitnehmer über eine nur in Messrichtung steife Kupplung an der Abtasteinheit angekoppelt ist. Diese Kupplung ermöglicht in allen anderen Richtungen eine Bewegung des Mitnehmers ohne Rückwirkung auf die präzise Führung und Bewegung der Abtasteinheit in Messrichtung.

Ein kompakter Aufbau und eine störungssichere Messwertgenerierung und Messwertübertragung bedingt die Integration von immer mehr elektrischen Bauelementen in der Abtasteinheit selbst. So werden hierzu vermehrt Sensorchips eingesetzt, in denen auf kleinstem Raum ein Array von Abtastsensoren, beispielsweise lichtempfindliche Detektoren bei lichtelektrisch abtastbarem Maßstab, sowie Signalverarbeitungsmittel wie beispielsweise A/D-Wandler, Verstärker, Mikroprozessoren und Schnittstellen angeordnet sind. Daraus resultiert eine vermehrte Wärmeerzeugung in der Abtasteinheit, die bedingt durch den erforderlichen kleinen Abtastabstand den Maßstab unverhältnismäßig stark erwärmt. Diese Erwärmung führt zu Längenänderungen des Maßstabs und zu Messungenauigkeiten.

Der Erfindung liegt die Aufgabe zugrunde, eine Längenmesseinrichtung mit hoher Messgenauigkeit zu schaffen.

Diese Aufgabe wird erfindungsgemäß durch die Merkmale des Anspruchs 1 gelöst.

Mit der Erfindung wird ein kompakter Aufbau einer Längenmesseinrichtung ermöglicht, wobei auch eine hohe Messgenauigkeit und eine reproduzierbare Positionsmessung erreichbar ist.

Durch das Vorsehen eines Wärmeleitelementes zwischen dem wärmeerzeugenden elektrischen Bauelement der Abtasteinheit, insbesondere dem Sensorchip und dem Mitnehmer wird ein Wärmeleitpfad zwischen dem elektrischen Bauelement und dem Mitnehmer geschaffen, um die an dem elektrischen Bauelement generierte Wärme an den Mitnehmer zu übertragen. Der Mitnehmer führt außerhalb des Gehäuses zu einem Montagebereich, so dass die Wärme weiter entlang des Mitnehmers nach außen geführt wird. Die am Wärmeleitpfad beteiligten Komponenten weisen einen geringen thermischen Widerstand auf. Das Wärmeleitelement ist darüber hinaus derart ausgelegt, dass es Relativbewegungen zwischen der Abtasteinheit und dem Mitnehmer zumindest quer zur Messrichtung zulässt, also in den Richtungen, welche die zwischen Abtasteinheit und Mitnehmer liegende Kupplung zulässt. Mit der Erfindung wird also gezielt ein Wärmeleitpfad vom Sensorchip in Richtung außerhalb des Gehäuses geschaffen.

In den abhängigen Ansprüchen sind vorteilhafte Ausgestaltungen der Erfindung angegeben.

Die Erfindung wird mit Hilfe eines Ausführungsbeispiels näher erläutert.

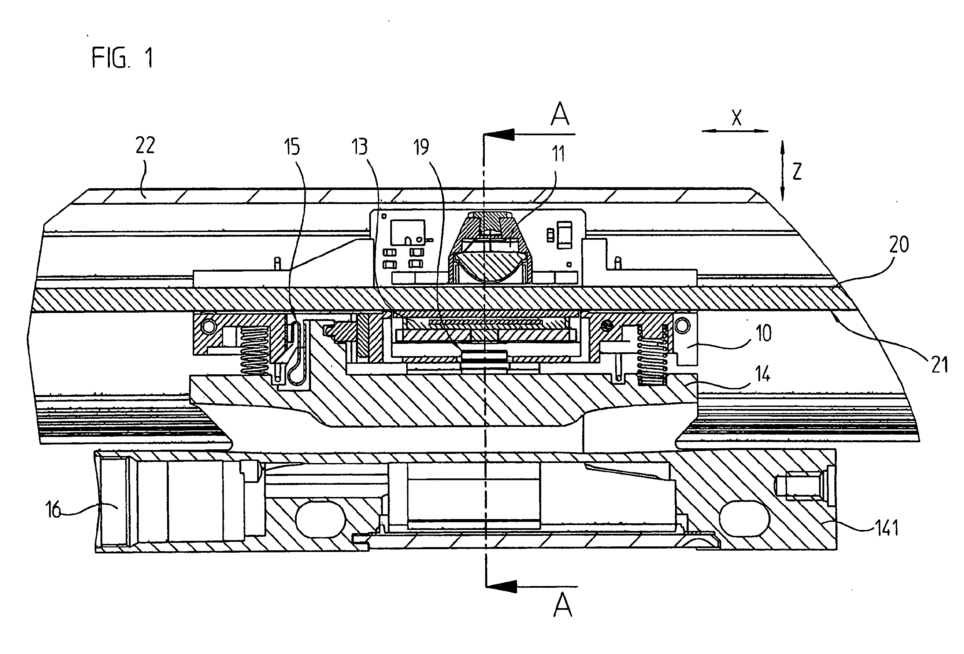

Dabei zeigt
- Figur 1: einen Längsschnitt einer Längenmesseinrichtung;
- Figur 2: einen Querschnitt A-A der Längenmesseinrichtung gemäß Figur 1;
- Figur 3: eine Detailansicht im Querschnitt und
- Figur 4: eine Draufsicht B-B aus Figur 3.

Die Erfindung ist am Beispiel einer optischen Längenmesseinrichtung dargestellt, mit der die Relativlage zweier in Messrichtung X gegeneinander verschiebbarer Objekte 1 und 2 gemessen werden soll. Dabei wird ein transparenter Maßstab 20 von einer relativ zum Maßstab 20 in Messrichtung X bewegbaren Abtasteinheit 10 abgetastet. Der Maßstab 20 weist eine Messteilung 21 auf, die von der Abtasteinheit 10 im Durchlicht abgetastet wird. Dazu umfasst die Abtasteinheit 10 eine Beleuchtungseinheit 11, die ein Lichtbündel aussendet, welches kollimiert durch den Maßstab 20 und weiter durch eine transparente Abtastplatte 12 verläuft und schließlich auf lichtempfindliche Abtastsensoren 133 eines Sensorchips 13 trifft. Das Lichtbündel wird dabei von der Messteilung 21 am Maßstab 20 positionsabhängig moduliert.

Der Maßstab 20 ist innerhalb eines Gehäuses 22 angeordnet, welches wiederum an dem zu messenden Objekt 2, beispielsweise einem Maschinenbett einer Werkzeugmaschine befestigt ist. Der Maßstab 20 ist dabei in bekannter Weise mit dem Gehäuse 22 verbunden, beispielsweise durch Kleben oder Klemmen. Das Gehäuse 22 weist in seiner Längsrichtung in Messrichtung X verlaufend einen Schlitz auf, der durch dachförmig geneigte Dichtlippen 23 verschlossen ist, durch die ein Mitnehmer 14 mit einem schwertförmigen Mittelstück hindurchgreift. Der Mitnehmer 14 weist einen Montagebereich 141 auf, mit dem er an dem relativ zum Maschinenbett 2 verschiebbaren Objekt 1, beispielsweise einem Schlitten der Werkzeugmaschine befestigbar ist.

Die Abtasteinheit 10 ist zur exakten Parallelführung längs des Maßstabs 20 an diesem und / oder am Gehäuse 22 geführt. Im dargestellten Ausführungsbeispiel ist die Abtasteinheit 10 über Rollen an zwei senkrecht zueinander ausgerichteten Oberflächen des Maßstabs 20 geführt, wobei Federn dazu dienen, eine Andruckkraft zu generieren.

Zwischen der Abtasteinheit 10 und dem Mitnehmer 14 ist eine Kupplung 15 angeordnet, die die Abtasteinheit 10 in Messrichtung X steif und quer dazu nachgiebig an den Mitnehmer 14 ankoppelt. Durch diese Maßnahme werden Fehlausrichtungen des Mitnehmers 14 nicht auf die Abtasteinheit 10 übertragen. Die Kupplung 15 ist nur schematisch dargestellt. Sie ist in an sich bekannter Weise beispielsweise gemäß der DE 29 29 989 A1 als in Messrichtung steifer Federdraht oder gemäß der EP 0 733 882 B1 als Kugelkupplung ausgebildet.

Der Sensorchip 13 weist ein Array von lichtempfindlichen Abtastsensoren 133 auf, welche das von der Messteilung 21 positionsabhängig modulierte Licht der Beleuchtungseinheit 11 empfangen und positionsabhängige elektrische Abtastsignale SA generieren. Der Sensorchip 13 ist ein elektrisches Bauelement, welches einen integrierten Schaltkreis enthält, der die Abtastsignale SA weiterverarbeitet. Der Sensorchip 13 weist als integrierte Mittel 134 zur Signalverarbeitung beispielsweise A/D-Wandler, Verstärker, Mikroprozessoren und auch Schnittstelleneinheiten auf, welche die Abtastsignale SA zu Ausgangssignalen SD aufbereiten und wandeln, die an einer Ausgangsleitung 17 anstehen und nach außen geführt werden. Wenn die Messteilung 21 ein absoluter Code ist, verarbeitet der Sensorchip 13 die Abtastsignale SA zu einem absoluten mehrstelligen digitalen Codewort SD, das über eine serielle Schnittstelleneinheit bitseriell am Ausgang des Sensorchips 13 bereitgestellt wird. Zum elektrischen Anschluss der Längenmesseinrichtung an eine Folgeelektronik weist der Mitnehmer 14 eine Anschlussmöglichkeit auf. Diese Anschlussmöglichkeit ist im dargestellten Beispiel eine Steckverbindung 16 im Mitnehmer 14. Die Ausgangssignale SD des Sensorchips 13 werden über eine Verbindungsleitung 17 zu dieser Steckverbindung 16 geführt. Als Träger der Verbindungsleitung 17 dient ein Flexleiter 18, der von der Abtasteinheit 10 zum Mitnehmer 14 geführt ist. Der Flexleiter 18 ist derart gestaltet, dass er die von der Kupplung 15 zugelassenen Bewegungen zwischen Abtasteinheit 10 und Mitnehmer 14 möglichst rückwirkungsfrei zulässt.

Durch die im Sensorchip 13 integrierte Signalverarbeitung der Abtastsignale SA zu einem die Position definierenden mehrstelligen Codewort SD ist eine weitgehend störungssichere Messwertgenerierung gewährleistet und es wird eine störungsunempfindliche serielle Übertragung von digitalen Positionsmesswerten SD vom Sensorchip 13 ausgehend ermöglicht. Nachteilig bei einer derartigen integrierten Signalverarbeitung auf kleinstem Raum ist der relativ hohe Energiebedarf und somit die generierte Verlustwärme.

Der Sensorchip 13 ist über ein Wärmeleitelement 19 mit dem Mitnehmer 14 verbunden. Das Wärmeleitelement 19 sowie die Kontaktierung des Wärmeleitelementes 19 an dem Sensorchip 13 einerseits und an dem Mitnehmer 14 andererseits ist derart ausgestaltet, dass ein guter Wärmeübergang und eine gute Wärmeleitung gewährleistet ist, um die an dem Sensorchip 13 generierte Wärme an den Mitnehmer 14 zu übertragen. Das Wärmeleitelement 19 ist dazu ausgelegt, Relativbewegungen zwischen dem Mitnehmer 14 und der Abtasteinheit 10 zumindest in Richtungen quer zur Messrichtung X möglichst rückwirkungsfrei zuzulassen. Hierzu weist das Wärmeleitelement 19 zumindest einen flexiblen bzw. biegbaren Abschnitt 191 auf. Dieser Abschnitt 191 ist im dargestellten Beispiel bandförmig und aus gut wärmeleitendem Material, vorzugsweise Kupfer. Aufgrund der Bandform ist trotz relativ großem Querschnitt und somit guter Wärmeleitfähigkeit eine noch ausreichende Flexibilität erreichbar. Ein guter rückwirkungsfreier Ausgleich in Richtungen quer zur Messrichtung X wird dadurch erreicht, dass der biegbare Abschnitt 191 eine Biegung, insbesondere aber mehrere Biegungen aufweist, derart dass der biegbare Abschnitt 191 eine Abstandsänderung in Z-Richtung ermöglicht bzw. ausgleicht. Die Erfindung ist aber nicht auf die Bandform des Abschnitts 191 beschränkt, alternativ könnten auch Litzendrähte, insbesondere ein Bündel Litzendrähte oder beweglich und gut wärmeleitend miteinander verbundene Kettenglieder, ein Balg, ein mit einem gut wärmeleitenden Medium gefüllter Balg oder ein gut wärmeleitendes elastisches Kunststoffteil Verwendung finden, wobei bei allen Ausführungen als Material des Wärmeleitelementes 19 auch ein elektrisch isolierendes Material verwendet werden kann.

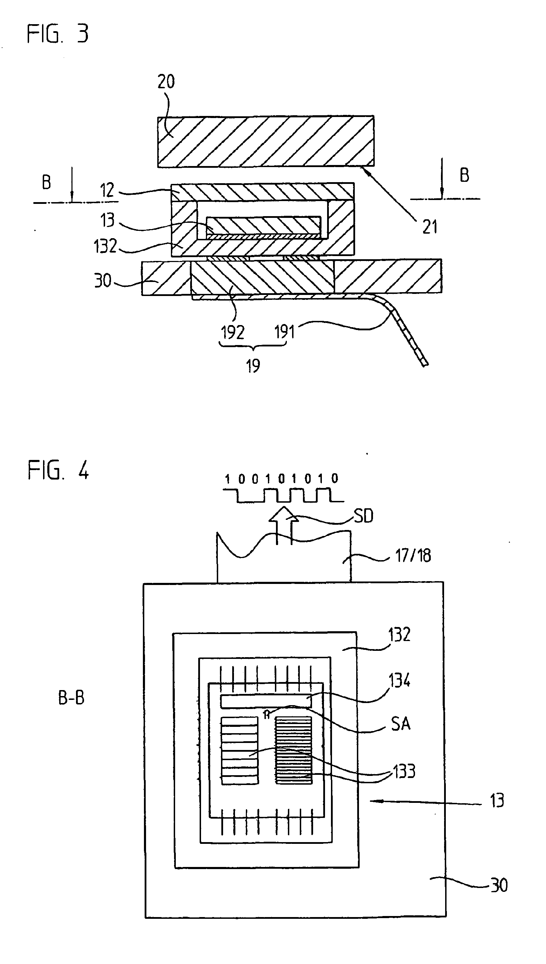

Eine gut wärmeleitende Ankopplung des Wärmeleitelementes 19 an den Sensorchip 13 ist in Figur 3 vergrößert dargestellt. Als Sensorchip 13 ist beispielsweise ein gehäuster Sensorchip 13 verwendet, der ein Keramikgehäuse 132 aufweist, dessen Abdeckung transparent ist und in bekannter Weise als Abtastplatte 12 fungiert. Der Sensorchip 13 ist auf einer Leiterplatte 30 elektrisch kontaktiert, wobei der Flexleiter 18 mit den zum Steckverbinder 16 führenden elektrischen Verbindungsleitungen 17 wiederum an der Leiterplatte 30 angeschlossen ist. Auf einer Seite der Leiterplatte 30 ist der Sensorchip 13 elektrisch kontaktiert und auf der anderen Seite der Leiterplatte 30 ist der flexible Abschnitt 191 des Wärmeleitelementes 19 gut wärmeleitend kontaktiert. Zur Wärmeübertragung zwischen dem Sensorchip 13 und dem flexiblen Abschnitt 191 des Wärmeleitelementes 19 ist ein Wärmeleiter 192 in Form einer Durchkontaktierung vorgesehen. Diese Durchkontaktierung kann ein in eine Bohrung der Leiterplatte 30 eingebrachtes hochwärmeleitendes Material sein oder ein bolzenförmiges Element oder auch aus mehreren Durchkontaktierungen bestehen. Der Wärmeleiter 192 bildet einen starren Abschnitt des Wärmeleitelementes 19 und eine gut wärmeleitende Verbindung der Unterseite des Sensorchips 13 mit dem flexiblen Abschnitt 191. Der flexible Abschnitt 191 ist an dem starren wärmeleitenden Abschnitt 192 möglichst großflächig und gut wärmeleitend angekoppelt, vorzugsweise durch Löten oder Kleben.

Die gut wärmeleitende Ankopplung des Wärmeleitelementes 19 an den Sensorchip 13 erfolgt alternativ durch direkten Anschluss des flexiblen Abschnitts 191 des Wärmeleitelementes 19 am Sensorchip 13 oder an einem den Sensorchip 13 tragenden Träger, beispielsweise durch möglichst großflächiges Anlöten. Diese gut wärmeleitende Ankopplung kann direkt an einer Fläche, insbesondere an der Unterseite eines ungehäusten Sensorchips bzw. an der Unterseite des Gehäuses 132 des gehäusten Sensorchips 13 erfolgen. Die Unterseite ist dabei die dem wärmeerzeugenden Chipbereich direkt gegenüberliegende Fläche. Eine gut wärmeleitende Ankopplung zwischen dem Sensorchip 13 und dem Wärmeleitelement 19 wird erreicht, wenn die Ankoppelfläche größer als 5 mm ² ist, um den Wärmeübergangswiderstand klein zu halten.

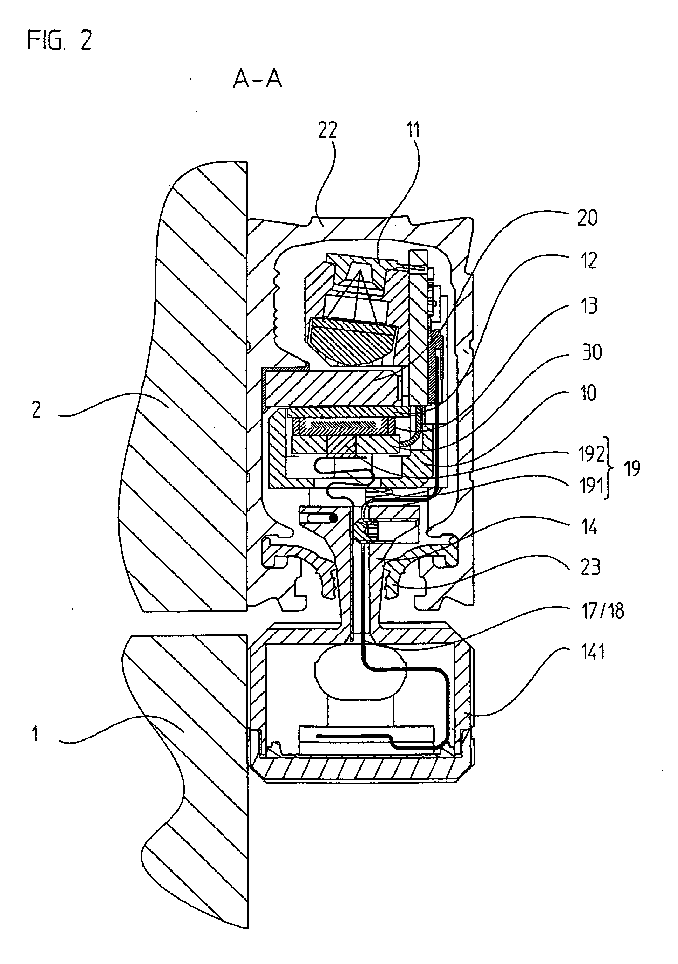

Das Wärmeleitelement 19 ist an dem Mitnehmer 14 gut wärmeleitend angekoppelt, um die vom Sensorchip 13 generierte Wärme zu diesem Mitnehmer 14 zu übertragen. Diese Ankopplung kann wiederum durch Löten erfolgen, oder wie in Figur 2 dargestellt, durch großflächiges Kontaktieren an eine Wandung des Mitnehmers 14 durch Klemmen über eine Klemmschraube.

Im Mitnehmer 14 ist eine Durchführung eingebracht, durch die der Flexleiter 18 von der Abtasteinheit 10 zu der Steckverbindung 16 geführt ist. An einer Wandung dieser Durchführung ist das Wärmeleitelement 19 angekoppelt. Dies hat den Vorteil, dass das Wärmeleitelement 19 besonders platzsparend und geschützt untergebracht ist. Die vom Sensorchip 13 erzeugte und über das Wärmeleitelement 19 zum Mitnehmer 14 transportierte Wärme wird vom Mitnehmer 14 aufgenommen. Der Mitnehmer 14 führt vom Innenraum des Gehäuses 22 nach außen zum Montagebereich 141 und besteht aus einem Material, das gut wärmeleitend ist, so dass die aufgenommene Wärme über den Mitnehmer 14 außerhalb des Gehäuses 22 transportiert wird.

Durch das Wärmeleitelement 19 wird die vom Sensorchip 13 generierte Wärme gezielt zum massiven Mitnehmer 14 geleitet. Der Mitnehmer 14 eignet sich besonders zur Wärmeabfuhr, da er zum Anbau an das zu messende Objekt 1 besonders stabil ausgeführt ist und in der Regel aus Metall, z.B. Aluminium, also gut wärmeleitendem Material ausgeführt ist. Der Mitnehmer 14 ist vom Innenraum des Gehäuses 22 nach außen geführt, so dass auch die über das Wärmeleitelement 19 zum Mitnehmer 14 geführte Wärme in diese Richtung, also weg vom Maßstab 20 geleitet wird.

In nicht gezeigter Weise kann es von Vorteil sein, wenn das Wärmeleitelement 19 sowie ggf. der Mitnehmer 14 im innerhalb des Gehäuses 22 verlaufenden Bereich gegenüber dem Innenraum des Gehäuses 22 wärmeisolierend ausgebildet ist, beispielsweise mit einem wärmeisolierenden Überzug versehen ist, wozu sich beispielsweise Neopren eignet, da dies flexibel ist und somit im Bereich des flexiblen Abschnittes 191 die Beweglichkeit nicht behindert. Dieser Überzug kann auch eine Beschichtung sein. Dadurch wird erreicht, dass die vom Sensorchip 13 aufgenommene Wärme gezielt außerhalb des Gehäuses 22 geleitet wird und nicht der Innenraum des Gehäuses 22 übermäßig aufgewärmt wird. Es wird gezielt ein gegenüber der Umgebung wärmeisolierter Wärmeleitpfad vom Sensorchip 13 zur Umgebung außerhalb des Gehäuses 22 geschaffen.

Im Messbetrieb, wenn also der Montagebereich 141 des Mitnehmers 14 an das zu messende Objekt 1 angebaut ist, hat der Mitnehmer 14 wärmeleitenden Kontakt mit dem zu messenden Objekt 1, so dass auch an dieses Wärme abgegeben werden kann. In nicht gezeigter Weise kann die Wärmeabfuhr auch noch dadurch unterstützt werden, dass am Mitnehmer 14 und zwar außerhalb des Gehäuses 22 und / oder zwischen dem Montagebereich 141 des Mitnehmers 14 und dem zu messenden Objekt 1 Kühlmittel vorgesehen werden. Diese Kühlmittel können Kühlrippen oder ein mit Kühlmedium durchflossener Kanal sein.

Um ein Einkoppeln von elektrischen Störungen über den Mitnehmer 14 zum Sensorchip 13 zu vermeiden, kann es notwendig sein, das Wärmeleitelement 19 elektrisch zu isolieren, um insbesondere einen elektrischen Kontakt zwischen dem Mitnehmer 14 und dem Wärmeleitelement 19 zu verhindern. Dies kann durch eine Zwischenlage erreicht werden, die zwischen dem Mitnehmer 14 und dem Wärmeleitelement 19 vorgesehen ist und aus einem Material besteht, das einerseits zum Ankoppeln des Wärmeleitelementes 19 an den Mitnehmer 14 gut wärmeleitend ist und andererseits elektrisch isolierend ist. Das Material ist beispielsweise eine Keramikfolie.

Im dargestellten Ausführungsbeispiel ist das Wärmeleitelement 19 parallel und unabhängig von dem Flexleiter 18 geführt. Einen kompakten Aufbau erhält man alternativ, wenn man den flexiblen Abschnitt 191 des Wärmeleitelementes 19 in den Flexleiter 18 (Leiterbahnen auf bzw. in elektrisch isolierender biegbarer flexibler Folie) integriert. Diese Integration kann so aussehen, dass man neben der elektrischen Verbindungsleitung 17 den flexiblen Abschnitt 191 des Wärmeleitelementes 19 auf dem elektrisch isolierenden Flexleiter 18 vorsieht oder einen mehrlagigen Flexleiter 18 verwendet, wobei eine elektrisch leitende Lage die Verbindungsleitung 17 aufweist und eine weitere davon elektrisch isolierte Lage den flexiblen Abschnitt 191 des Wärmeleitelementes 19 bildet, wobei diese Lage dann einerseits gut wärmeleitend an dem Sensorchip 13 kontaktiert ist und andererseits gut wärmeleitend an dem Mitnehmer 14 kontaktiert ist.

Die Erfindung kann auch bei einer Längenmesseinrichtung eingesetzt werden, bei der der Maßstab reflektierend ausgebildet ist und sich der Sensorchip 13 auf der gleichen Seite wie die Beleuchtungseinheit 11 befindet. Ebenso kann der Maßstab magnetisch, kapazitiv oder induktiv abtastbar ausgeführt sein, wobei dann der Sensorchip 13 angepasste Sensorelemente beinhaltet, um positionsabhängige Abtastsignale zu generieren. Der Sensorchip 13 kann in nicht gezeigter Weise auch mehrteilig ausgeführt sein, wobei alle oder nur eines dieser Bauteile erfindungsgemäß entwärmt wird, weshalb die Erfindung allgemein auf die gezielte Wärmeabfuhr eines wärmeerzeugenden elektrischen Bauelementes der Abtasteinheit 10 bezogen wurde.

Nochmals zusammengefasst, betrifft die Erfindung eine Längenmesseinrichtung zum Messen der Relativlage zweier Objekte 1, 2, mit
- einem Maßstab 20 in einem Gehäuse 22;
- einer relativ zur Einheit Maßstab 20 und Gehäuse 22 in einer Messrichtung X verschiebbaren Abtasteinheit 10, wobei die Abtasteinheit 10 innerhalb des Gehäuses 22 angeordnet ist und zumindest ein wärmeerzeugendes elektrisches Bauelement 13 aufweist;
- einem Mitnehmer 14, der über eine in Messrichtung X steife und quer dazu nachgiebige Kupplung 15 an der Abtasteinheit 10 befestigt ist und der zu einem außerhalb des Gehäuses 22 angeordneten Montagebereich 141 verläuft, gekennzeichnet durch
- ein Wärmeleitelement 19, das dazu ausgelegt ist, um an dem elektrischen Bauelement 13 generierte Wärme an den Mitnehmer 14 zu übertragen, und das Relativbewegungen zwischen dem Mitnehmer 14 und der Abtasteinheit 10 zumindest quer zur Messrichtung X zulässt.

In vorteilhafter Weise ist das elektrische Bauelement ein Sensorchip 13, der Abtastsensoren 133 zur Abtastung des Maßstabes 20 und Generierung von Abtastsignalen SA sowie Mittel 134 zur Verarbeitung dieser Abtastsignale SA zu einem Positionsmesswert SD aufweist, wobei der Positionsmesswert SD vom Sensorchip 13 als Ausgangssignal in Form eines mehrstelligen digitalen Codewortes bitseriell bereitgestellt wird.

Insbesondere ist das Wärmeleitelement 19 einerseits gut wärmeleitend an dem elektrischen Bauelement 13 angekoppelt und andererseits gut wärmeleitend an dem Mitnehmer 14 angekoppelt.

Der Mitnehmer 14 weist einen außerhalb des Gehäuses 22 angeordneten Montagebereich 141 zum Befestigen des Mitnehmers 14 an dem zu messenden Objekt 1 auf, und der Mitnehmer 14 besteht aus gut wärmeleitendem Material, um die vom Wärmeleitelement 19 aufgenommene Wärme zum Montagebereich 141 zu leiten.

Vorteilhaft ist, wenn das Wärmeleitelement 19 zumindest einen flexiblen biegbaren Abschnitt 191 aufweist, der insbesondere bandförmig ist.

Als gut wärmeleitendes Material für das Wärmeleitelement 19 eignet sich beispielsweise Kupfer.

Vorteilhaft ist, wenn das elektrische Bauelement 13 auf einer Leiterplatte 30 angeordnet ist und das Wärmeleitelement 19 einen ersten Abschnitt 192 aufweist, der von dem elektrischen Bauelement 13 durch die Leiterplatte 30 führt und einen zweiten nachfolgenden Abschnitt 191 aufweist, der vom ersten Abschnitt 192 ausgehend zum Mitnehmer 14 führt und die Relativbewegungen zwischen dem Mitnehmer 14 und der Abtasteinheit 10 quer zur Messrichtung X zulässt.

Wenn das elektrische Bauelement 13 auf einer Leiterplatte 30 angeordnet ist, kann das Wärmeleitelement 19 Bestandteil eines Flexleiters 18 sein, der von der Abtasteinheit 10 zum Mitnehmer 14 geführt ist. Dabei enthält der Flexleiter 18 elektrische Verbindungsleitungen 17 zum Übertragen von Positionsmesswerten SD vom Sensorchip 13 zu einer Steckverbindung 16 des Montagebereiches 141 sowie eine als Wärmeleitelement 19 ausgebildete Leitung, die einerseits wärmeleitend an den Sensorchip 13 angekoppelt ist und andererseits an den Mitnehmer 14 wärmeleitend angekoppelt ist.

## Patentansprüche

1. Längenmesseinrichtung zum Messen der Relativlage zweier Objekte (1, 2), mit
- einem Maßstab (20) in einem Gehäuse (22);
- einer relativ zur Einheit Maßstab (20) und Gehäuse (22) in einer Messrichtung X verschiebbaren Abtasteinheit (10), wobei die Abtasteinheit (10) innerhalb des Gehäuses (22) angeordnet ist und zumindest ein wärmeerzeugendes elektrisches Bauelement (13) aufweist;
- einem Mitnehmer (14), der über eine in Messrichtung X steife und quer dazu nachgiebige Kupplung (15) an der Abtasteinheit (10) befestigt ist und der zu einem außerhalb des Gehäuses (22) angeordneten Montagebereich (141) verläuft, **gekennzeichnet durch**
- ein Wärmeleitelement (19), das dazu ausgelegt ist, um an dem elektrischen Bauelement (13) generierte Wärme an den Mitnehmer (14) zu übertragen, und das Relativbewegungen zwischen dem Mitnehmer (14) und der Abtasteinheit (10) zumindest quer zur Messrichtung X zulässt.

2. Längenmesseinrichtung nach Anspruch 1, **dadurch gekennzeichnet, dass** das elektrische Bauelement ein Sensorchip (13) ist, der Abtastsensoren (133) zur Abtastung des Maßstabes (20) und Generierung von Abtastsignalen (SA) sowie Mittel (134) zur Verarbeitung dieser Abtastsignale (SA) zu einem Positionsmesswert (SD) aufweist.

3. Längenmesseinrichtung nach Anspruch 2, **dadurch gekennzeichnet, dass** der Positionsmesswert (SD) vom Sensorchip (13) als Ausgangssignal in Form eines mehrstelligen digitalen Codewortes bitseriell bereitgestellt wird.

4. Längenmesseinrichtung nach einem der vorhergehenden Ansprüche, **dadurch gekennzeichnet, dass** das Wärmeleitelement (19) einerseits gut wärmeleitend an dem elektrischen Bauelement (13) angekoppelt ist und andererseits gut wärmeleitend an dem Mitnehmer (14) angekoppelt ist.

5. Längenmesseinrichtung nach Anspruch 4, **dadurch gekennzeichnet, dass** der Mitnehmer (14) einen außerhalb des Gehäuses (22) angeordneten Montagebereich (141) zum Befestigen des Mitnehmers (14) an dem zu messenden Objekt (1) aufweist, und dass der Mitnehmer (14) aus gut wärmeleitendem Material besteht, um die vom Wärmeleitelement (19) aufgenommene Wärme zum Montagebereich (141) zu leiten.

6. Längenmesseinrichtung nach einem der vorhergehenden Ansprüche, **dadurch gekennzeichnet, dass** das Wärmeleitelement (19) zumindest einen flexiblen biegbaren Abschnitt (191) aufweist.

7. Längenmesseinrichtung nach Anspruch 6, **dadurch gekennzeichnet, dass** der flexible Abschnitt (191) bandförmig ist.

8. Längenmesseinrichtung nach einem der vorhergehenden Ansprüche, **dadurch gekennzeichnet, dass** das Wärmeleitelement (19) das Material Kupfer aufweist.

9. Längenmesseinrichtung nach einem der vorhergehenden Ansprüche, **dadurch gekennzeichnet, dass** das elektrische Bauelement (13) auf einer Leiterplatte (30) angeordnet ist und das Wärmeleitelement (19) einen ersten Abschnitt (192) aufweist, der von dem elektrischen Bauelement (13) durch die Leiterplatte (30) führt und einen zweiten nachfolgenden Abschnitt (191) aufweist, der vom ersten Abschnitt (192) ausgehend zum Mitnehmer (14) führt und die Relativbewegungen zwischen dem Mitnehmer (14) und der Abtasteinheit (10) quer zur Messrichtung X zulässt.

10. Längenmesseinrichtung nach einem der vorhergehenden Ansprüche 1 bis 8, **dadurch gekennzeichnet, dass** das elektrische Bauelement (13) auf einer Leiterplatte (30) angeordnet ist und das Wärmeleitelement Bestandteil eines Flexleiters ist, der von der Abtasteinheit (10) zum Mitnehmer (14) geführt ist.

11. Längenmesseinrichtung nach Anspruch 10, **dadurch gekennzeichnet, dass** der Flexleiter (18) elektrische Verbindungsleitungen (17) zum Übertragen von Positionsmesswerten (SD) vom Sensorchip (13) zu einer Steckverbindung (16) des Montagebereiches (141) sowie eine als Wärmeleitelement (19) ausgebildete Leitung enthält, die einerseits wärmeleitend an den Sensorchip (13) angekoppelt ist und andererseits an den Mitnehmer (14) wärmeleitend angekoppelt ist.

## Claims

1. Length-measuring device for measuring the relative position of two objects (1, 2), comprising
- a scale (20) in a housing (22);
- a scanning unit (10) which can be displaced in a measuring direction X relative to the unit of scale (20) and housing (22), the scanning unit (10) being arranged inside the housing (22) and having at least one heat-generating electric component (13);
- a driver (14) which is fastened on the scanning unit (10) via a coupling (15) which is rigid in the measuring direction X and flexible transverse thereto, and which runs to a mounting area (141) arranged outside the housing (22), **characterized by**
- a heat-conducting element (19) which is designed to transmit heat generated at the electric component (13) to the driver (14), and which permits relative movement between the driver (14) and the scanning unit (10), at least transverse to the measuring direction X.

2. Length-measuring device according to Claim 1, **characterized in that** the electric component is a sensor chip (13) which has scanning sensors (133) for scanning the scale (20) and generating scanning signals (SA), as well as means (134) for processing said scanning signals (SA) to form a measured position value (SD).

3. Length-measuring device according to Claim 2, **characterized in that** the measured position value (SD) is provided by the sensor chip (13) as output signal in the form of a multi-digit digital code word in a bitserial fashion.

4. Length-measuring device according to one of the preceding claims, **characterized in that** the heat-conducting element (19) is coupled at one end with good thermal conduction to the electric component (13), and is coupled at the other end with good thermal conduction to the driver (14).

5. Length-measuring device according to Claim 4, **characterized in that** the driver (14) has a mounting region (141), arranged outside the housing (22), for fastening the driver (14) on the object (1) to be measured, and **in that** the driver (14) consists of a material that conducts heat well in order to lead the heat absorbed from the heat-conducting element (19) to the mounting region (141).

6. Length-measuring device according to one of the preceding claims, **characterized in that** the heat-conducting element (19) has at least one flexible, bendable section (191).

7. Length-measuring device according to Claim 6, **characterized in that** the flexible section (191) is strip-shaped.

8. Length-measuring device according to one of the preceding claims, **characterized in that** the heat-conducting element (19) has the material copper.

9. Length-measuring device according to one of the preceding claims, **characterized in that** the electric component (13) is arranged on a printed circuit board (30) and the heat-conducting element (19) has a first section (192) which leads from the electric component (13) through the printed circuit board (30) and has a second, subsequent section (191), which leads outward from the first section (192) to the driver (14) and permits the relative movement between the driver (14) and the scanning unit (10) transverse to the measuring direction X.

10. Length-measuring device according to one of the preceding Claims 1 to 8, **characterized in that** the electric component (13) is arranged on a printed circuit board (30) and the heat-conducting element is a constituent of a flexible conductor which is guided from the scanning unit (10) to the driver (14).

11. Length-measuring device according to Claim 10, **characterized in that** the flexible conductor (18) includes electric connecting lines (17) for transmitting measured position values (SD) from the sensor chip (13) to a plug connector (16) of the mounting region (141), as well as a line designed as a heat-conducting element (19) which is coupled at one end to the sensor chip (13) with thermal conduction, and is coupled at the other end to the driver (14) with thermal conduction.

## Revendications

1. Dispositif de mesure de longueur pour mesurer la position relative de deux objets (1, 2), avec
- une échelle de mesure (20) dans un boîtier (22) ;
- une unité d'exploration (10) déplaçable par rapport à l'unité d'échelle de mesure (20) et de boîtier (22) dans une direction de mesure X, l'unité d'exploration (10) étant disposée à l'intérieur du boîtier (22) et présentant au moins un composant électrique (13) générant de la chaleur ;
- un entraîneur (14) qui est fixé sur l'unité d'exploration (10) par l'intermédiaire d'un couplage (15) rigide en direction de mesure X et flexible transversalement à celle-ci, et qui s'étend vers une zone de montage (141) disposée en dehors du boîtier (22), **caractérisé par**
- un élément de conduction thermique (19) qui est étudié pour transférer à l'entraîneur (14) de la chaleur générée au niveau du composant électrique (13) et qui autorise des mouvements relatifs entre l'entraîneur (14) et l'unité d'exploration (10) au moins transversalement à la direction de mesure X.

2. Dispositif de mesure de longueur selon la revendication 1, **caractérisé en ce que** le composant électrique est une puce de capteur (13) qui présente des capteurs d'exploration (133) pour explorer l'échelle de mesure (20) et générer des signaux d'exploration (SA) ainsi que des moyens (134) pour traiter ces signaux d'exploration (SA) afin de donner une valeur de mesure de position (SD).

3. Dispositif de mesure de longueur selon la revendication 2, **caractérisé en ce que** la valeur de mesure de position (SD) est mise à disposition en série de bits par la puce de capteur (13) en tant que signal de sortie sous la forme d'un mot de code numérique à plusieurs chiffres.

4. Dispositif de mesure de longueur selon l'une des revendications précédentes, **caractérisé en ce que** l'élément de conduction thermique (19) est couplé d'un côté avec une bonne conduction thermique au composant électrique (13) et est couplé d'un autre côté avec une bonne conduction thermique à l'entraîneur (14).

5. Dispositif de mesure de longueur selon la revendication 4, **caractérisé en ce que** l'entraîneur (14) présente une zone de montage (141) disposée en dehors du boîtier (22) pour la fixation de l'entraîneur (14) sur l'objet (1) à mesurer, et **en ce que** l'entraîneur (14) se compose d'un matériau à bonne conduction thermique afin de conduire la chaleur absorbée par l'élément de conduction thermique (19) vers la zone de montage (141).

6. Dispositif de mesure de longueur selon l'une des revendications précédentes, **caractérisé en ce que** l'élément de conduction thermique (19) présente au moins un tronçon (191) flexible pouvant être courbé.

7. Dispositif de mesure de longueur selon la revendication 6, **caractérisé en ce que** le tronçon flexible (191) est en forme de bande.

8. Dispositif de mesure de longueur selon l'une des revendications précédentes, **caractérisé en ce que** l'élément de conduction thermique (19) présente le matériau cuivre.

9. Dispositif de mesure de longueur selon l'une des revendications précédentes, **caractérisé en ce que** le composant électrique (13) est disposé sur une carte de circuits imprimés (30) et **en ce que** l'élément de conduction thermique (19) présente un premier tronçon (192), lequel s'étend à partir du composant électrique (13) à travers la carte de circuits imprimés (30) et présente un deuxième tronçon (191) suivant, lequel s'étend en partant du premier tronçon (192) jusqu'à l'entraîneur (14) et autorise les mouvements relatifs entre l'entraîneur (14) et l'unité d'exploration (10) transversalement à la direction de mesure X.

10. Dispositif de mesure de longueur selon l'une des revendications précédentes 1 à 8, **caractérisé en ce que** le composant électrique (13) est disposé sur une carte de circuits imprimés (30) et **en ce que** l'élément de conduction thermique est un élément constitutif d'un conducteur flexible, lequel va de l'unité d'exploration (10) jusqu'à l'entraîneur (14).

11. Dispositif de mesure de longueur selon la revendication 10, **caractérisé en ce que** le conducteur flexible (18) contient des lignes de liaison électriques (17) pour la transmission de valeurs de mesure de position (SD) de la puce de capteur (13) jusqu'à une connexion enfichable (16) de la zone de montage (141) ainsi qu'un conducteur réalisé en tant qu'élément de conduction thermique (19), lequel est couplé d'un côté de manière thermoconductrice à la puce de capteur (13) et de l'autre côté de manière thermoconductrice à l'entraîneur (14).
